# EUROPÄISCHE PATENTSCHRIFT

(11) **EP 0 519 201 B1**
(45) Veröffentlichungstag und Bekanntmachung des Hinweises auf die Patenterteilung: **19.04.1995**
(21) Anmeldenummer: 92107943.0
(22) Anmeldetag: 12.05.1992
(51) Int. Cl.: B23K 9/028, B23K 9/32

(54) **Vorrichtung zur Gasbeflutung von zwei miteinander zu verschweissenden Rohren**
Device for gas flooding of two pipes for being welded together
Dispositif pour le remplissage en gaz de deux tubes pour leur soudage bout à bout

(30) Priorität: 18.06.1991 DE 9107465 U
(43) Veröffentlichungstag der Anmeldung: 23.12.1992
(73) Patentinhaber: Jankus, Werner, D-58313 Herdecke (DE)
(72) Erfinder: Jankus, Werner, D-58313 Herdecke (DE)
(74) Vertreter: Niemann, Uwe, Dr.-Ing.

(56) Entgegenhaltungen:
- DE-A- 3 300 382
- DE-U- 8 807 145

## Beschreibung

Die Erfindung betrifft eine Vorrichtung zur Gasbeflutung von zwei miteinander zu verschweißenden Rohren, - mit einem in den zu beflutenden Rohrabschnitt einführbaren Körper aus einem doppelwandigen Zylinder, der einen Gasanschluß sowie eine feinporige Gasaustrittsfläche aufweist, und mit beidseits des Körpers angeordneten nachgiebigen Stützen, die gegen die Rohrinnenseiten abdichten.

Derartige Vorrichtungen werden bei der Herstellung von hochwertigen Rohrschweißverbindungen an niedrig- und hochlegierten Stählen eingesetzt, um einem begrenzten Rohrabschnitt im Bereich der herzustellenden Schweißnaht ein Schutzgas zuzuführen, welches das Verzundern der Schweißnaht und der Übergangszonen verhindert.

Bei einer bekannten Vorrichtung der eingangs beschriebenen Gattung (DE-U-88 07 145) bestehen die Stützscheiben aus einem hitzebeständigen Elastomer, und jede Stützscheibe weist an ihrem Umfang zwei umlaufende Dichtlippen auf, die in entgegengesetzten Richtungen zur Scheibenebene abgewinkelt sind. Die Stützscheiben sind an den Enden eines Rohres befestigt, welches zwischen den Stützscheiben einen Körper aus feinporigem Material trägt. Durch das Rohr wird das Schutzgas zugeführt, welches aus dem Körper aus feinporigem Material austritt und den zu beflutenden Rohrabschnitt im wesentlichen turbulenzfrei füllt. Die bekannte Vorrichtung hat sich an sich bewährt. Sie ist aber wegen ihres konstruktiven Aufbaus und insbesondere der Stabilität der Stützscheiben beschränkt auf den Einsatz in Rohren mit Nennweiten bis zu NW 40.

Aufgabe der Erfindung ist es, eine gattungsgemäße Vorrichtung so zu verbessern, daß sie auch bei Rohren mit Nennweiten über NW 40 einsetzbar ist.

Diese Aufgabe wird dadurch gelöst, daß der doppelwandige Zylinder durch radiale Trennwände in mehrere sich in Umfangsrichtung erstreckende Kammern unterteilt ist, wobei die beiden endseitigen Kammern außen offen sind sowie zur Aufnahme von Stützringen eingerichtet sind, wobei eine mittlere Kammer innenseitig den Gasanschluß aufweist sowie außenseitig mit einem Mantel aus feinporigem Material abgedeckt ist und wobei wenigstens eine gasdurchlässige, mit einer Drossel versehene Kammer vorgesehen ist.

Durch Ausbildung des Körpers als doppelwandiger Zylinder besteht die Möglichkeit, die Vorrichtung in Anpassung an Rohre mit nahezu beliebig großen Nennweiten herzustellen, weil der Abstand des doppelwandigen Zylinders von der Rohrinnenwand nach Maßgabe der Konstruktion und Stabilität der Stützringe eingerichtet werden kann. Da der zu beflutende Raum auf den Ringraum zwischen dem doppelwandigen Zylinder und der Rohrinnenwand beschränkt ist, wird auch der Gasverbrauch reduziert. Der Ringraum wird mit Schutzgas versorgt, welches aus dem Mantel aus feinporigem Material austritt. Überschüssiges Schutzgas kann über die Drossel abfließen, insbesondere dann, wenn die Schweißnaht zwischen den miteinander zu verschweißenden Rohren geschlossen wird.

Für die weitere Ausgestaltung der Erfindung bestehen mehrere Möglichkeiten. Ein Vorschlag der Erfindung geht dahin, die endseitigen Kammern zur formschlüssigen Aufnahme der Stützringe mit einer geschlitzten Außenwandung auszurüsten, so daß weitere Halteelemente für die Stützringe überflüssig sind.

Die mittlere Kammer ist zweckmäßigerweise außenseitig offen und mit einem Mantel aus Sintermetallvlies abgedeckt, der insbesondere in Nuten der die mittlere Kammer begrenzenden radialen Trennwände eingesetzt ist.

Die gasdurchlässige Kammer kann eine Außenwandung mit wenigstens einer Öffnung und eine Innenwandung mit einer darin eingesetzten Drossel aus einem feinporigen Sintermetall aufweisen. Es ist ohne weiteres möglich, beidseits der mittleren Kammer eine gasdurchlässige Kammer anzuordnen.

Bei sehr großen Ausführungen kann der doppelwandige Zylinder auch aus mehreren Zylinderringstücken mit zugeordneten Gasanschlüssen und Stützringstücken gebildet sein. Es versteht sich, daß dann auch geeignete Einrichtungen zum Verbinden benachbarter Zylinderringstücke angeordnet werden.

Im folgenden wird ein in der Zeichnung dargestelltes Ausführungsbeispiel der Erfindung erläutert; es zeigen:
- Fig. 1: schematisch einen Längsschnitt durch eine erfindungsgemäße Vorrichtung im Einsatz,
- Fig. 2: eine andere Ausführung des Gegenstandes nach Figur 1.

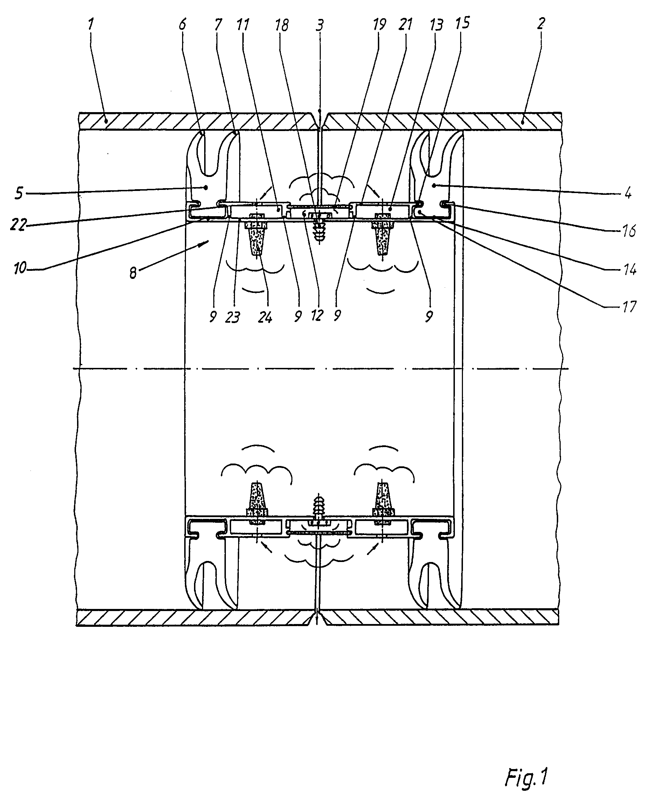

In Figur 1 sind zwei Enden 1 , 2 von miteinander zu verschweißenden Rohrabschnitten dargestellt. In das Innere der beiden Enden 1, 2 ist eine Vorrichtung zur Gasbeflutung eingesetzt, zu der zwei beidseits der Schweißnaht 3 angeordnete Stützringe 4, 5 gehören, die aus einem hitzebeständigen Elastomer bestehen und an ihrem Umfang jeweils umlaufende Dichtlippen 6, 7 aufweisen.

Zur Vorrichtung gehört ferner ein doppelwandiger Zylinder 8, der durch radiale Trennwände 9 in mehrere, sich in Umfangsrichtung erstreckende Kammern 10, 11 12, 13, 14 unterteilt ist. Die beiden äußeren Kammern 10, 14 sind zur Aufnahme der Stützringe 4, 5 eingerichtet und besitzen dazu in Umfangsrichtung geschlitzte Außenwandungen 15, deren Wandungsabschnitte beidseits des Schlitzes in zugeordnete Nuten 16 am Fuß 17 der Stützringe 4 bzw. 5 formschlüssig eingreifen. Der Querschnitt des Fußes 17 der Stützringe 4 bzw. 5 ist dem Kammerquerschnitt angepaßt.

Die mittlere Kammer 12 weist innenseitig einen Gasanschluß 18 auf. Außenseitig ist die mittlere Kammer 12 mit einem Mantel 19 aus einem Sintermetallvlies, das auf einem Stützgewebe angeordnet sein kann, abgedeckt. Der Mantel 19 ist randseitig in Nuten 20 der die mittlere Kammer 12 begrenzenden radialen Trennwände 9 eingesetzt.

Die beiden neben der mittleren Kammer 12 angeordneten Kammern 11 und 13 sind gasdurchlässig. Sie sollen das A b f ließen überschüssigen Schutzgases ermöglichen. Dazu weist die Außenwandung 21 jeder dieser Kammern 12, 13 wenigstens eine Öffnung 22 auf,und in die Innenwandung 23 ist eine Drossel 24 aus einem feinporigen Sintermetall eingesetzt.

Die dargestellte Vorrichtung arbeitet wie folgt: Mithilfe eines nicht dargestellten Zugmittels, oder auf andere Weise, wird die Vorrichtung so weit in die Rohrabschnitte eingebracht, bis sie sich in der dargestellten Position befindet. Gegebenenfalls wird vorher der Gasanschluß 18 mit einem Schlauch für die Schutzgasversorgung verbunden. Solange die Vorrichtung bewegt wird, verformen sich die Dichtlippen 6, 7, ohne daß jedoch die Abstützung der Vorrichtung insgesamt dadurch aufgehoben wird. Vor Beginn des Schweißvorganges wird ein Schutzgas zugeführt, welches durch die Kammer 12 und den Mantel 19 in den zwischen dem doppelwandigen Zylinder 8 und den Rohrinnenseiten gebildeten Ringraum strömt, diesen Ringraum ausfüllt und dabei die darin enthaltene Luft verdrängt. Die Schutzgaszufuhr wird während des Schweißvorganges aufrechterhalten. Auch nach dem Schließen der Schweißnaht 3 ist eine Spülung des abgeschlossenen Ringraumes mit Schutzgas möglich, weil das Schutzgas über die Drosseln 24 abfließen kann.

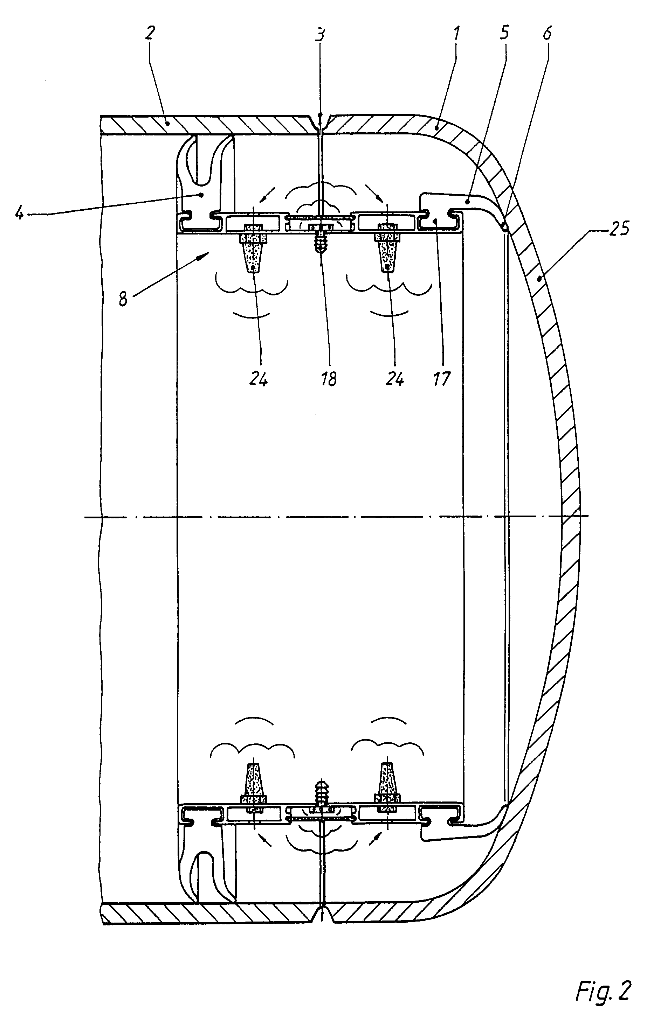

Bei der in Figur 2 dargestellten Ausführung bezeichnen gleiche Bezugszeichen gleiche Teile. Die Schweißnaht 3 wird hier zwischen dem Ende 1 eines Rohrbodens 25 und dem Ende 2 eines weiterführenden Rohrabschnittes gebildet. Am Stützring 5 ist der Fuß 17 seitlich angeschlossen, so daß der Stützring 5 und seine einzige Dichtlippe 6 sich im wesentlichen parallel zum doppelwandigen Zylinder 8 erstrecken und die Dichtlippe 6 am Rohrboden 25 anliegt.

Bei einer nicht dargestellten Ausführung kann der doppelwandige Zylinder 8 aus mehreren Zylinderringstücken mit zugeordneten Gasanschlüssen und Stützringstücken gebildet sein.

## Patentansprüche

1. Die Vorrichtung zur Gasbeflutung von zwei miteinander zu verschweißenden Rohren (1, 2), - mit einem in den zu beflutenden Rohrabschnitt einführbaren Körper aus einem doppelwandigen Zylinder (8), der einen Gasanschluß (18) sowie eine feinporige Gasaustrittsfläche aufweist und mit beidseits des Körpers angeordneten nachgiebigen Stützen (4, 5) die gegen die Rohrinnenseiten abdichten**, dadurch gekennzeichnet,** daß der doppelwandige Zylinder (8) durch radiale Trennwände (9) in mehrere, sich in Umfangsrichtung erstreckende Kammern (10 bis 14) unterteilt ist, wobei die beiden endseitigen Kammern (10, 14) außen offen sind sowie zur Aufnahme von Stützringen (4, 5) eingerichtet sind, wobei eine mittlere Kammer (12) innenseitig den Gasanschluß (18) aufweist sowie außenseitig mit einem Mantel (19) aus feinporigem Material abgedeckt ist und wobei wenigstens eine gasdurchlässige, mit einer Drossel (24) versehene Kammer (11, 13) vorgesehen ist.

2. Vorrichtung nach Anspruch 1, **dadurch gekennzeichnet,** daß die endseitigen Kammern (10, 14) zur formschlüssigen Aufnahme der Stützringe (4, 5) eine geschlitzte Außenwandung (15) aufweisen.

3. Vorrichtung nach Anspruch 1 oder 2, **dadurch gekennzeichnet,** daß die mittlere Kammer (12) außenseitig offen und mit einem Mantel (19) aus Sintermetallvlies abgedeckt ist.

4. Vorrichtung nach einem der Ansprüche 1 - 3, **dadurch gekennzeichnet,** daß der Mantel (19) in Nuten (20) der die mittlere Kammer (12) begrenzenden radialen Trennwände (9) eingesetzt ist.

5. Vorrichtung nach einem der Ansprüche 1 - 4, **dadurch gekennzeichnet**, daß die gasdurchlässige Kammer (11, 13) eine Außenwandung (21) mit wenigstens einer Öffnung (22) und eine Innenwandung (23) mit einer darin eingesetzten Drossel (24) aus einem feinporigen Sintermaterial aufweist.

6. Vorrichtung nach einem der Ansprüche 1 - 5, **dadurch gekennzeichnet**, daß beidseits der mittleren Kammer (12) eine gasdurchlässige Kammer (11, 13) angeordnet ist.

7. Vorrichtung nach einem der Ansprüche 1 - 6, **dadurch gekennzeichnet**, daß der doppelwandige Zylinder (8) aus mehreren Zylinderstücken mit zugeordneten Gasanschlüssen und Stützringstücken gebildet ist.

## Claims

1. The device for gas flooding of two pipes (1, 2) to be welded together, comprising a body, which is insertable into the pipe section to be flooded, of a double-walled cylinder (8), which has a gas connection (18) as well as a finely porous gas outlet surface and with flexible supports (4, 5) which are arranged at both ends of the body and seal off relative to the pipe inner sides, characterised thereby that the double-walled cylinder (8) is subdivided by radial partition walls (9) into several chambers (10 to 14) extending in circumferential direction, wherein the two chambers (10, 14) at the ends are outwardly open and set up for the reception of support rings (4, 5), wherein a middle chamber (12) has the gas connection (18) at the inner side and is covered at the outer side by a sheathing (19) of finely porous material and wherein at least one gas-permeable chamber (11, 13), which is provided with a throttle (24), is provided.

2. Device according to claim 1, characterised thereby that the chambers (10, 14) at the ends have a slotted outer wall (15) for shape-locking reception of the support rings (4, 5).

3. Device according to claim 1 or 2, characterised thereby that the middle chamber (12) is open at the outer side and covered with a sheathing (19) of dry powdered metal fleece.

4. Device according to one of claims 1 to 3, characterised thereby that the sheathing (19) is inserted into grooves (20) of the radial partition walls (9) bounding the middle chamber (12).

5. Device according to one of claims 1 to 4, characterised thereby that the gas-permeable chamber (11, 13) has an outer wall (21) with at least one opening (22) and an inner wall (23) with a throttle (24) inserted therein of a finely porous powder material.

6. Device according to one of claims 1 to 5, characterised thereby that a gas-permeable chamber (11, 13) is arranged at both sides of the middle chamber (12).

7. Device according to one of claims 1 to 6, characterised thereby that the double-walled cylinder (8) is formed from several cylinder pieces with associated gas connections and support ring pieces.

## Revendications

1. Dispositif pour le remplissage en gaz de deux tubes (1, 2) à souder l'un à l'autre, avec un corps pouvant être introduit dans le tronçon de tube à remplir et constitué d'un cylindre (8) à double paroi présentant un raccord (18) d'alimentation en gaz et une surface de sortie de gaz à pores fins, et avec des supports flexibles (4, 5) disposés de part et d'autre du corps et s'appliquant en étanchéité contre les côtés intérieurs du tube, **caractérisé** en ce que le cylindre (8) à double paroi est divisé par des cloisons de séparation radiales (9) en plusieurs chambres (10 à 14) s'étendant en direction circonférentielle, les deux chambres terminales (10, 14) étant ouvertes vers l'extérieur et conçues pour recevoir des bagues de support (4, 5), une chambre centrale (12) présentant sur son côté intérieur le raccord (18) d'alimentation en gaz et étant recouverte sur son côté extérieur d'une enveloppe (19) en matériau à pores fins, et au moins une chambre (11, 13) perméable au gaz et pourvue d'un étranglement (24) étant prévue.

2. Dispositif selon la revendication 1, **caractérisé** en ce que les chambres terminales (10, 14) présentent une paroi extérieure fendue (15) pour recevoir en engagement positif les bagues de support (4, 5).

3. Dispositif selon la revendication 1 ou 2, **caractérisé** en ce que la chambre centrale (12) est ouverte sur son côté extérieur et recouverte d'une enveloppe (19) en voile de métal fritté.

4. Dispositif selon l'une des revendications 1 à 3, **caractérisé** en ce que l'enveloppe (19) est insérée dans des rainures (20) des cloisons de séparation radiales (9) délimitant la chambre centrale (12).

5. Dispositif selon l'une des revendications 1 à 4, **caractérisé** en ce que la chambre (11, 13) perméable au gaz présente une paroi extérieure (21) dotée d'au moins une ouverture (22), et une paroi intérieure (23) dans laquelle est installé un étranglement (24) en matériau fritté à pores fins.

6. Dispositif selon l'une des revendications 1 à 5, **caractérisé** en ce qu'une chambre perméable au gaz respective (11, 13) est disposée de part et d'autre de la chambre centrale (12).

7. Dispositif selon l'une des revendications 1 à 6, **caractérisé** en ce que le cylindre (8) à double paroi est formé de plusieurs parties de cylindre auxquelles sont associés des raccords d'alimentation en gaz et des parties de bagues de support.
